# FASCICULE DE BREVET EUROPEEN

(11) **EP 3 155 063 B1**
(45) Date de publication et mention de la délivrance du brevet: **16.09.2020**
(21) Numéro de dépôt: 15733817.9
(22) Date de dépôt: 10.06.2015
(51) Int. Cl.: C09K 5/06, F28D 20/00

(54) **MATÉRIAUX A BASE DE PHOSPHATE DANS DES SYSTÈMES DE STOCKAGE THERMIQUE D'ÉNERGIE**
PHOSPHATBASIERTE MATERIALIEN IN WÄRMEENERGIESPEICHERSYSTEMEN
PHOSPHATE-BASED MATERIALS IN THERMAL-ENERGY STORAGE SYSTEMS

(30) Priorité: 13.06.2014 FR 1455398
(43) Date de publication de la demande: 19.04.2017
(73) Titulaire: Association pour la Recherche et le Développement des Méthodes et Processus Industriels (ARMINES), 75272 Paris Cedex 06 (FR); ECOLE NATIONALE SUPERIEURE DES MINES D'ALBI-CARMAUX, 81013 Albi Ct Cedex 9 (FR)
(72) Inventeur: NZIHOU, Ange, 81000 Albi (FR); PHAM MINH, Doan, 81000 Albi (FR); SHARROCK, Patrick, 31400 Toulouse (FR)
(74) Mandataire: Cabinet Beau de Loménie
(86) Numéro de dépôt international: PCT/FR2015/051525
(87) Numéro de publication internationale: WO 2015/189517

(56) Documents cités:
- DE-A1- 3 101 045
- DE-A1-102006 039 343
- DE-A1-102007 059 042
- GB-A- 1 396 292
- GB-A- 1 497 042
- GB-A- 2 142 039
- US-A- 2 827 438
- US-A- 3 719 225
- US-A- 4 037 650
- US-A- 4 406 806
- US-A1- 2011 120 673

## Description

### Domaine de l'invention

La présente invention se rapporte à l'utilisation d'un matériau à base de phosphate en tant que produit caloporteur ou produit de stockage thermique d'énergie et à des systèmes de stockage de l'énergie thermique comportant des réacteurs comprenant un matériau à base de phosphate.

### Etat de la Technique

Les besoins énergétiques ne cessent d'augmenter, exigeant l'utilisation des énergies nouvelles et renouvelables. Plusieurs pistes sont possibles comme la géothermie, l'aérothermie, la biomasse, les déchets ou coproduits, les éoliennes, le solaire concentré, etc. A priori, les verrous scientifiques peuvent être présents dans différentes étapes qui sont l'exploitation de l'énergie d'une source donnée, le transfert, le stockage et la conversion en énergies finales.

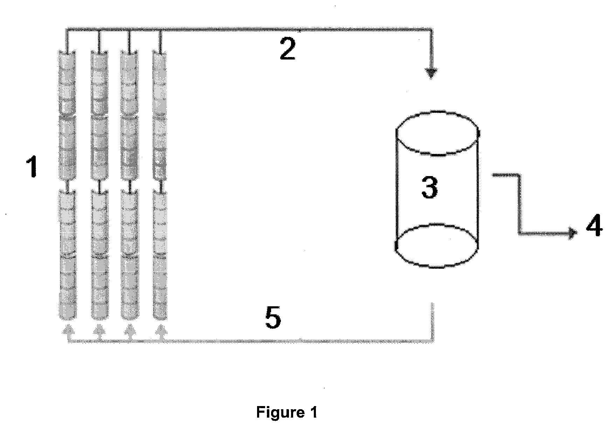

Le stockage thermique a commencé depuis les années 80, et a connu une forte croissance ces dernières années. Il s'agit très souvent du stockage thermique du solaire concentré, donc à des températures élevées. Mais il existe un très grand intérêt pour les sources d'énergies fatales présentes dans des installations industrielles. Il s'agit dans ce dernier cas du stockage thermique d'énergie à des températures modérées. Un tel système est décrit dans la Figure 1. Le collecteur thermique [1] produit de l'air chauffé ou fluide caloporteur [2] qui va vers le matériau de stockage compris dans le contenant désigné milieu de stockage [3], pour aller ensuite soit vers le local à réchauffer [4] ou, après échange thermique, vers le système de retour [5] au collecteur thermique [1]. Si le fluide caloporteur est un gaz comme l'air ambiant, alors il restera toujours fluide et pourra transporter l'énergie thermique vers un matériau de stockage dans le contenant désigné milieu de stockage [1] qui restituera la chaleur au local réchauffé même en absence de source d'énergie, comme par exemple la nuit quand le collecteur est un collecteur solaire.

La capture de l'énergie solaire se pratique par simple exposition aux rayons du soleil. L'énergie lumineuse absorbée se transforme en énergie thermique par augmentation de la température des matériaux absorbants. La quantité d'énergie stockée dépend de la capacité calorifique (*Cₚ*) du matériau et de la différence de température entre le début et la fin de l'absorption du rayonnement (Δ*T*). Il est intéressant de pouvoir restituer la nuit de la chaleur accumulée le jour afin de pouvoir maintenir une température homogène dans des locaux sans avoir à fournir de l'énergie primaire. Ainsi, la capture, le stockage et la restitution de l'énergie en général constituent une voie appréciable d'économie d'énergie. Les travaux sur le solaire concentré, par exemple : centrale Thémis à Targassonne, France (http://pyreneescatalanes.free.fr/Thematiques/Batiments/Histoire/Themis.php montrent qu'il est possible de stocker de grandes quantités d'énergie en focalisant l'énergie lumineuse sur une masse de sels fondus qui libèrent ensuite lors de leur refroidissement l'énergie sensible (*Cₚ* x Δ*T*) et l'enthalpie de fusion (Δ*H_{f}*), énergies accumulées lors de la phase de réchauffement diurne. Les sels utilisés sont composés de nitrates alcalins ou de mélanges formant des eutectiques à bas point de fusion. Toutefois, ces sels fondus ne sont pas très disponibles et leur utilisation pose des difficultés du fait de la concurrence avec les activités agricoles. Des émissions de NOₓ peuvent avoir lieu lorsque la température du stockage dépasse une certaine limite. Par exemple le système eutectique de LiNO₃-NaNO₃-KNO₃ se décompose totalement entre 577 et 603°C sous différentes atmosphères d'argon, d'azote et d'air (Rene I. Olivares, William Edwards, LiNO3-NaNO3-KNO3 salt for thermal energy storage: Thermal stability évaluation in différent atmosphères, Thermochimica Acta 560 (2013) 34-42).

Il a été montré que l'utilisation de mélanges de sels alcalins sous forme de chlorures permettait d'augmenter l'accumulation et le transfert thermique grâce à l'augmentation des températures des systèmes de stockage. Ainsi, des températures de fusion de mélanges de chlorures alcalins autour de 500°C et allant jusqu'à 700°C ont été décrites (Thermal energy storage with molten salt, Justin Raade, John Vaughn, Benjamin ELKIN, Halotechnics, Inc., WO 2013116510 A1). Ces sels peuvent servir de fluide caloporteur car leur viscosité est assez faible pour pouvoir pomper ces sels fondus à haute température. Cependant, la corrosion due aux sels pose des problèmes et les systèmes de stockage thermique utilisant des chlorures alcalins doivent être recouverts de céramiques isolantes spécifiques.

### Résumé de l'invention

Les présents inventeurs ont recherché d'autres matériaux plus économes et pratiques pour utilisation en stockage thermique. Ainsi a-t-il été découvert que divers phosphates ou mélanges contenant des phosphates présentent de nombreux avantages en stockage thermique.

Dans un aspect, la présente invention se rapporte donc à l'utilisation d'un matériau à base de phosphate en tant que produit caloporteur ou produit de stockage thermique d'énergie dans laquelle ledit matériau à base de phosphate comprend un ou plusieurs orthophosphates, pyro-phosphates, poly-phosphates, apatites pures ou substituées, et/ou minerais de phosphates, avec un rapport atomique de O/P compris entre 3 et 4, utilisés seuls ou en combinaisons ou en mélange majoritaire à plus de 50% en masse avec d'autres solides inertes minoritaires contenant de la silice, dans laquelle le(s) phosphate(s) dudit matériau à base de phosphate est (sont) constitué(s) de phosphate(s) anhydre(s), et dans laquelle ledit matériau à base de phosphate est porté à une température d'au moins 130°C. Ainsi, les matériaux à base de phosphate peuvent par exemple être présents dans le milieu du stockage ou circulant entre un générateur et des collecteurs thermiques. US 3,719,225 A décrit un matériau utilisé pour le stockage thermique comprenant majoritairement des hydroxydes, ainsi que des nitrates de métaux alcalins. Ce document décrit l'utilisation de phosphates en tant qu'additifs anticorrosion à un pourcentage pouvant théoriquement atteindre les 30% en masse, mais ils ne sont en réalité jamais présents à plus de 5% dans les exemples (taux qui présente par ailleurs les meilleurs résultats en matière de réduction de la corrosion). Ce document n'enseigne donc pas l'utilisation d'un matériau à base d'au moins 50% en masse de phosphate anhydres, à une température d'au moins 130°C.

Le matériau à base de phosphate comprend un ou plusieurs orthophosphates, pyro-phosphates, poly-phosphates, apatites pures ou substituées, et/ou minerais de phosphates. Le rapport atomique O/P est compris entre 3 et 4.

En effet, un ensemble de matériaux à base de phosphate, comprenant des orthophosphates, hydrogénophosphates, pyro-phosphates, poly-phosphates, apatites pures ou substituées, et minerais de phosphates, seuls ou en combinaisons ou en mélange majoritaire (plus de 50% en masse) avec d'autres solides inertes minoritaires contenant de la silice, et de préférence dans la gamme de densité de 2,4 à 7,1 g/cm³, sont utilisés comme produits caloporteurs ou de stockage thermique d'énergie dans le but d'accumuler la chaleur lors d'un cycle de réchauffement pour restituer cette énergie thermique lors de l'étape de refroidissement par restitution de l'énergie sensible avec en plus l'énergie contribuée par l'enthalpie de cristallisation.

De manière préférentielle, le matériau à base de phosphate comprend un ou plusieurs sels de métaux alcalins, de métaux alcalinoterreux et/ou de métaux di- ou trivalents et/ou de métaux de transition. Les métaux alcalins comprennent notamment le lithium, le sodium et/ou le potassium. Les métaux alcalinoterreux comprennent notamment le magnésium, le calcium, le strontium et/ou le baryum. Les métaux di- ou trivalents et/ou de métaux de transition comprennent notamment le fer, l'aluminium, le plomb ou encore le manganèse, le cuivre, le cadmium ou tout autre élément dit de transition. La substitution partielle ou totale du métal alcalin ou alcalinoterreux par un métal plus lourd peut permettre d'augmenter la masse volumique et de modifier les capacités de stockage calorifique, ainsi que d'améliorer la conductivité thermique et électrique.

Lors de l'utilisation d'un matériau à base de phosphate en tant que produit caloporteur ou produit de stockage thermique d'énergie selon la présente invention, il est préférable que le domaine de température de cette utilisation se situe entre au moins 130°C et au plus 1200°C. De plus, les matériaux à base de phosphate utilisés sont des matériaux anhydres. Les hydrates tels que (à titre d'exemple) Na₂HPO₄.xH2O (x variable) ne sont pas des matériaux préférentiels dans le cadre de la présente invention. De tels hydrates sont décrits dans les demandes suivantes : US 2,827,438 A, US 2011/120673 A1, DE 31 01 045 A1, DE 10 2006 039343 A1, US 4,406,806 A, DE 10 2007 059042 A1, GB 1 396 292 A, GB 1 497 042 A, GB 2 142 039 A et US 4,037,650 A. Les phosphates hydratés, qui présentent dans leur formule des molécules d'eau d'hydratation, peuvent notamment fonctionner en dissociant l'eau de manière réversible, mais ceci dans une plage de températures ne dépassant pas 120°C. Les matériaux à base de phosphate anhydres peuvent être employés à des températures d'au moins 130°C et sont stables sur une longue durée.

Dans un aspect préférentiel de l'invention, celle-ci se rapporte à l'utilisation, en tant que produit caloporteur ou produit de stockage thermique d'énergie, d'un matériau comprenant, en plus du phosphate, une charge non-phosphate. Cette charge peut être notamment une forme de silice, du talc, du sable, ou d'autres silicates amorphes ou cristallins tel que le quartz. Cette charge peut notamment permettre d'ajuster le coefficient de dilatation thermique du matériau. La charge non-phosphate constitue moins de 50% en masse par rapport à la masse totale du matériau à base de phosphate.

Dans un aspect préférentiel de l'invention, celle-ci se rapporte à l'utilisation, en tant que produit caloporteur ou produit de stockage thermique d'énergie, d'un matériau comprenant, en plus du phosphate, un composant coloré foncé, tel que le graphite, introduit en quantité suffisante pour noircir les solides. La quantité du composant coloré foncé sera de préférence au maximum 2% en masse par rapport à la masse totale du matériau à base de phosphate, et de préférence de 1 à 2% en masse.

De manière préférentielle, le matériau à base de phosphate utilisé en tant que produit caloporteur ou produit de stockage thermique d'énergie selon l'invention est entièrement minéral, ne comportant aucun composant organique, tels que des liants ou autre adjuvants polymères.

De manière préférentielle, le matériau à base de phosphate utilisé en tant que produit caloporteur ou produit de stockage thermique d'énergie selon l'invention comprend au moins 50% en masse d'un sel métallique de phosphate, et de préférence comporte entre 3,4% et 38,5% de phosphore (P) en masse par rapport au matériau pris dans sa totalité.

Dans un mode de réalisation avantageux de la présente invention, celle-ci porte sur l'utilisation d'un matériau à base de phosphate comprenant deux ou plusieurs phosphates avec des points de fusion différents. Ce système permet de faire varier les plages de températures opérationnelles, avec une fourchette de température de fusion d'au moins de 200°C. De préférence, deux phosphates seront présents dont les points de fusion diffèrent par au moins 200°C.

Dans un autre aspect, la présente invention se rapporte à un système de stockage de l'énergie thermique comportant un réacteur contenant un matériau à base de phosphate, ledit réacteur étant sous forme d'échangeur thermique parcouru par un fluide caloporteur pour évacuer les calories vers au moins une installation consommatrice de chaleur comme, par exemple, une turbine à vapeur ou un local à réchauffer. De manière préférentielle, ledit fluide caloporteur peut être de l'air comprimé. Les systèmes de stockage de l'énergie thermique selon l'invention peuvent comporter tous les matériaux à base de phosphates mentionnés précédemment, mais de manière préférentielle dans un tel système dans un mode de réalisation, le matériau à base de phosphate comprend le phosphate réfractaire du type apatite ou un mélange apatite/minerai phosphaté fritté, d'origine naturelle ou synthétique.

Dans un autre aspect, la présente invention se rapporte à un système de stockage de l'énergie thermique comportant un matériau à base de phosphate fondu circulant entre une source chaude d'énergie thermique et un échangeur thermique consommateur d'énergie. Les systèmes de stockage de l'énergie thermique selon l'invention peuvent comporter tous les matériaux à base de phosphates mentionnés précédemment, mais de manière préférentielle dans un tel système dans un mode de réalisation, le matériau à base de phosphate comprend le Na₃P₃O₉ et/ou le (NaPO₃)ₙ, avec n compris entre 3 et 16. Ce système peut fonctionner dans la plage de températures allant de température ambiante à environ 650°C, et plus précisément de 650°C à 300°C (température maximale et minimale).

Concernant un matériau à base de phosphate qui serait choisi parmi : le phosphate réfractaire du type apatite ou un mélange apatite/minerai phosphaté fritté, d'origine naturelle ou synthétique, un tel système peut fonctionner de 20°C jusqu'à une haute température atteignant 1200°C.

Le matériau à base de phosphate possédera avantageusement des porosités et une composition adaptées à l'échange de calories par un flux traversant de gaz caloporteur pouvant être de l'air comprimé ou non. Une porosité interconnectée de 20% à 40% en volume est préférée pour optimiser les échanges thermiques gaz-solide.

### Brève description des Figures

La Figure 1 est une représentation schématique d'un système de stockage thermique d'énergie à des températures modérées ou élevées pour les fluides caloporteurs gazeux.

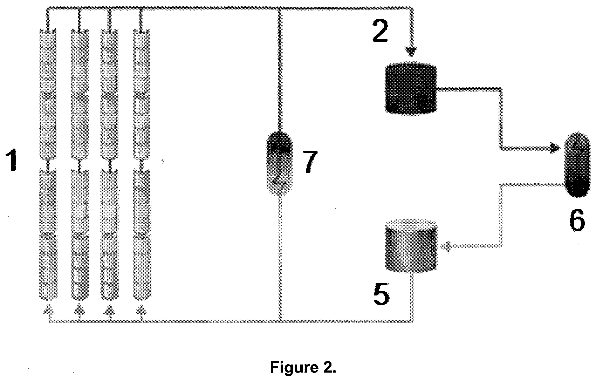

La Figure 2 est une représentation schématique d'un système de stockage thermique avec fluide caloporteur solide fondu fournissant la chaleur à un générateur électrique.
La Figure 3 présente l'analyse TG-DSC de Na₃P₃O₉, un polyphosphate simple.
La Figure 4 présente l'analyse TG-DSC de Ca₃(PO₄)₂.
La Figure 5 présente la mesure effectuée entre 35 et 105 °C de la capacité calorifique (*Cₚ*) de (NaPO₃)ₙ pur.
La Figure 6 présente la capacité calorifique (*Cₚ*) du minerai de phosphate contenant 29% en masse en P₂O₅.

### Description détaillée de l'invention

Globalement les phosphates existent sous diverses formes qui sont les orthophosphates (rapport molaire O/P égal à 4/1), les pyrophosphates (rapport molaire O/P égal à 3,5/1) et les polyphosphates (rapport molaire O/P égal à 3/1), qui en plus peuvent être obtenus sous forme protonée (acide, par exemple H₂PO₄⁻ ou HPO₄²⁻) ou déprotonée (PO₄³⁻). Il existe donc un ensemble important de produits, soit naturels soit synthétiques, qui sont formés à partir des anions phosphates en combinaison avec les cations métalliques usuels M, où le métal M peut être un alcalin, ou alcalino-terreux ou un quelconque des métaux du tableau périodique des éléments. L'analyse des composés formés montre que de nombreuses réactions se produisent lors de l'augmentation de la température des phosphates contenant des hydrogéno-phosphates, en particulier la transformation en pyrophosphates ou polyphosphates par perte d'eau due à la déshydratation de ces hydrogéno-phosphates. Une fois formés, ces pyrophosphates et polyphosphates sont stables. Néanmoins, il existe des séries d'orthophosphates, en particulier ceux formés avec les cations réfractaires (calcium, magnésium, fer, aluminium, zircone, titane, et autres) qui sont très stables à des hautes températures et ne se décomposent pas. Les sels stables thermiquement peuvent être mis en œuvre pour le stockage thermique avec un système adapté. Un tel système est représenté à la Figure 1. En effet, les phosphates réfractaires caloporteurs (phosphates de calcium, magnésium, fer, aluminium, zirconium ou titane) peuvent être mis en forme par frittage pour obtenir des céramiques à porosité et compositions contrôlées. Dans le schéma de système de stockage thermique, un fluide caloporteur peut circuler entre les collecteurs thermiques [1] et le générateur électrique [6] comme par exemple un sel alcalin de phosphate fondu à une température de 630°C à 800°C. Le chauffage auxiliaire [7] permet de démarrer le cycle de fusion en faisant circuler le fluide entre la partie chaude [2] et la partie froide [5].

La stabilité thermique est la première propriété importante pour l'utilisation en stockage thermique à long terme, afin de permettre de nombreux cycles de réchauffement et refroidissement. L'étude de la stabilité thermique peut être menée par analyse thermogravimétrique et thermique différentielle afin de mesurer les pertes de masses éventuelles et les changements de phases impliquant les changements de chaleur (endothermiques ou exothermiques) et vérifier la réversibilité et reproductibilité des phénomènes thermiques. Les présents inventeurs ont examiné les coefficients de dilatation thermique, de conductivité thermique et de capacité calorifique des phosphates. Plusieurs orthophosphates, pyrophosphates et polyphosphates ont été testés. Par analyse thermogravimétrique, ces produits ont été soumis à plusieurs cycles chauffage-refroidissement sous air à des températures programmées. Ces analyses permettent de confirmer l'absence de volatilisation de composés chimiques lors de ces cycles. La qualification des produits se détermine par l'observation des mesures thermiques répétées sans changements notables des masses employées. Ainsi, il est possible de sélectionner et d'obtenir des matériaux pour les systèmes de stockage thermique adaptés aux températures des systèmes mis en œuvre.

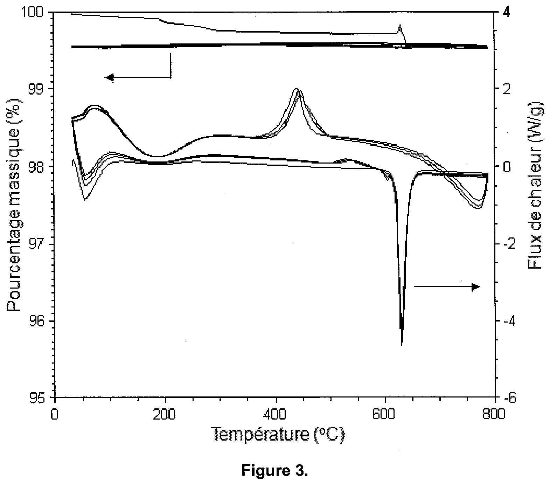

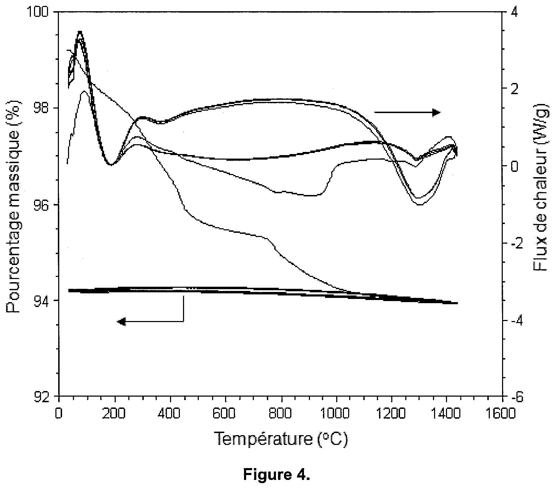

Par exemple, des céramiques poreuses à base d'apatites substituées et frittées permettent d'accumuler l'énergie thermique jusqu'à des températures voisines de 1200°C, suivies de la libération de l'énergie accumulée par refroidissement lent lors du soufflage d'un gaz caloporteur comprimé ou non qui peut être de l'air au travers des céramiques. Le cycle réchauffement-refroidissement peut être répété indéfiniment avec des apatites frittées autour de 1000°C sans que les paramètres dimensionnels soient affectés. Les Figures 3 et 4 montrent, comme exemple, la stabilité thermique des différents produits phosphatés lors des cycles d'analyse thermogravimétrique. Les conditions d'analyse sont : vitesse de chauffage de 20°C/min ; masse du produit d'environ 30 mg pour chaque analyse ; atmosphère d'air avec le débit de 100 mL/min.

Les Figures 3 et 4 montrent que les matériaux à base de phosphates sélectionnés sont thermiquement très stables pendant plusieurs cycles de chauffage-refroidissement. La Figure 3 est une analyse TG-DSC de Na₃P₃O₉, un polyphosphate simple. Après une 1^{ère} perte de masse de moins de 0,5% en masse pendant le 1er cycle, due à la perte d'humidité de surface, le produit a une très bonne stabilité massique pendant les 3 à 20 cycles suivants. Ce produit a la température de fusion de 628°C (pic endothermique vers le bas). Il cristallise vers 442°C (pic exothermique vers le haut) dans les conditions d'analyse utilisées. En fonction du type de phosphate (orthophosphate, pyrophosphate, polyphosphate) et de cation métallique associé avec le phosphate, les matériaux peuvent avoir des points de fusion à des températures variées, permettant d'avoir un choix large des matériaux pour adapter au besoin pour le stockage thermique d'énergie.

Dans l'analyse TG-DSC de Na₄P₂O₇.10H₂O, la perte de masse pendant le 1er cycle est due à la déshydratation. Ensuite, la masse est stable pendant les cycles suivants. Ce produit a la température de fusion de 988°C. Il cristallise vers 970°C dans les conditions d'analyse utilisées.

La Figure 4 montre l'analyse TG-DSC de Ca₃(PO₄)₂. Des pertes de masse pendant le 1er cycle d'environ 5,6% ont été observées. Ensuite, la masse ne change plus pendant les cycles suivants. Ce produit fond à 1391°C et sa recristallisation a lieu lentement entre 1000 et 400°C dans les conditions d'analyse utilisées.

L'analyse TG-DSC d'une hydroxyapatite stœchiométrique (Ca₅(PO₄)₃OH) sous air entre 30 et 800°C, montre, après une 1ère perte de masse durant le 1er cycle d'analyse (de moins de 3% en masse), le produit n'a pratiquement aucune perte de masse pendant les 3 cycles d'analyse suivants. L'analyse TG-DSC d'un minerai de phosphate contenant 29% en masse de P₂O₅, montre, après une première perte de masse d'environ 14%, probablement due à des réactions de décarbonatation, que la masse reste stable pendant les cycles suivants.

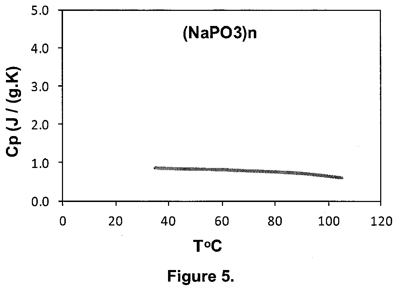

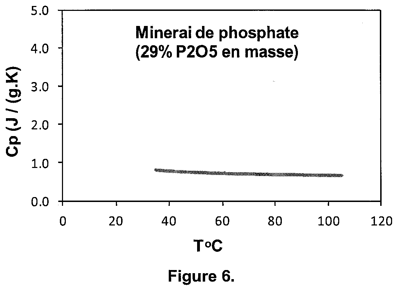

L'énergie thermique peut être stockée sous forme de chaleur latente (fusion-cristallisation/refroidissement) et également sous forme de chaleur sensible (chauffage du matériau). Des mesures de la capacité calorifique des matériaux à base de phosphates ont donc été réalisées. Les Figures 5 et 6 présentent quelques exemples des résultats obtenus. La Figure 5 montre la mesure effectuée entre 35 et 105 °C de la capacité calorifique (*Cₚ*) de (NaPO₃)ₙ pur et la Figure 6 montre la capacité calorifique (*Cₚ*) du minerai de phosphate contenant 29% en masse en P₂O₅. Les mesures de *Cₚ* montrent que les phosphates purs ou le minerai de phosphate contenant 29% en masse en P₂O₅ ont des valeurs de *Cₚ* voisines d'environ 600 à 900 J kg⁻¹ K⁻¹. Sans prendre en compte la chaleur latente de certains phosphates, ces matériaux ont des pouvoirs de stockage thermique d'énergie importante selon les critères de l'AIE (Agence Internationale de l'Energie) (Antoine Meffre, rapport de thèse « Matériaux de stockage thermique haute température issus de la valorisation de matières premières secondaires inorganiques », Université de Perpignan via Domitia (2013)).

Les valeurs de la conductivité thermique apparente de certains produits phosphatés sont présentées dans le Tableau 1. Ces produits sont des poudres fines et les mesures ont été réalisées avec des poudres en vrac. Ces conductivités représentent la somme de la conductivité intrinsèque des particules poudres de produits phosphatés et de l'air existant entre ces particules.

**Tableau 1. Conductivité thermique apparente des produits phosphatés sous forme poudre. La mesure est effectuée avec des poudres en vrac utilisant un analyseur Hot Disk© TPS 2500 S, avec une précision de ± 5%.**

| Produit | λ (W m⁻¹ K⁻¹) | |
|---|---|---|
| | Mesure à 21 °C | Mesure à 150 °C |
| Na₃PO₄ | 0,122 | 0,163 |
| Na₅P₃O₁₀ | 0,127 | 0,148 |
| K₄P₂O₇ | 0,088 | 0,103 |
| Ca₃(PO₄)₂ | 0,072 | 0,076 |
| Na₃P₃O₉ | 0,154 | 0,174 |
| (NaPO₃)ₙ | 0,128 | 0,159 |
| Ca₅(PO₄)₃(OH) de 8 m²/g | 0,081 | 0,090 |
| Ca₅(PO₄)₃(OH) de 55 m²/g | 0,056 | 0,062 |
| FePO₄ | 0,107 | 0,175 |
| Minerai* | 0,188 | 0,222 |

| | | |
|---|---|---|
| (*) : Minerai de phosphate contenant 29% en masse en P₂O₅. | | |

En ce qui concerne les propriétés thermo-mécaniques des produits phosphatés, il y a en général peu de dilatation thermique lors du chauffage des produits poudres à base de phosphate. Les analyses de dilatation thermo-mécanique des poudres phosphatées lors des essais sur un appareil de SETARAM SetSys 16/18 montrent que les poudres phosphatées ont une dilatation ou un retrait de moins de 2% dans les conditions d'analyse utilisées (une charge de 5 g est appliquée sur la poudre, en vrac, durant toute la mesure et les rampes de chauffage sont de 10°C/minute). La courbe dilatométrique de (NaPO₃)ₙ montre un premier retrait important pendant le chauffage de 30 à 570°C, puis ce produit reste thermo-mécaniquement stable. Il n'y a eu pratiquement pas de dilatation/retrait lors du 2^{ème} cycle de chauffage-isotherme. La courbe dilatométrique de Ca₃(PO₄)₂ montre que le changement de dimension de l'échantillon est moins de 1%.

Ces propriétés sont utiles dans le but d'emmagasiner de grandes quantités de matériaux dans un minimum de volume sans risque de rupture du contenant par effet de dilatation thermique. Le Tableau 2 montre les valeurs de la densité vraie de quelques phosphates, mesurée par un picno-mètre à hélium. La densité de ces phosphates varie entre 2,48 et 3,16 g/cm³, plus élevée que celle des sels fondus (nitrates de potassium et de sodium) utilisés actuellement pour le stockage thermique d'énergie.

**Tableau 2. Densité vraie de quelques phosphates, mesurée par le picno-mètre à hélium.**

| Produit | Densité vraie, g/cm³ |
|---|---|
| Na₃PO₄ | 2,51 |
| Na₅P₃O₁₀ | 2,53 |
| K₄P₂O₇ | 2,41 |
| Ca₃(PO₄)₂ | 2,96 |
| Na₃P₃O₉ | 2,49 |
| (NaPO₃)ₙ | 2,48 |
| Ca₅(PO₄)₃(OH) de 8 m²/g | 2,94 |
| Ca₅(PO₄)₃(OH) de 55 m²/g | 2,83 |
| Ca₅(PO₄)₃(OH) fritté à 1000°C | 3,16 |
| FePO₄ | 2,75 |
| Minerai* | 2,96 |
| NaNO₃ | 2.25 |
| KNO₃ | 2.10 |

| | |
|---|---|
| (*) : Minerai de phosphate contenant 29% en masse en P₂O₅. | |

L'intérêt de l'utilisation des phosphates pour le stockage thermique d'énergie réside dans ce que ces composés montrent une large gamme de points de fusion avec des matériaux stables thermiquement et chimiquement (pas de décomposition ni de volatilisation observées). Ainsi, le choix peut être fait entre les systèmes de moyenne température ou haute température en substituant les cations partenaires de l'anion phosphate. Pour résumer, les phosphates alcalins sont bien adaptés aux températures entre leurs points de fusion (630°C pour Na₃P₃O₉) et 800°C, alors que les phophates de métaux divalents et autres (calcium, magnésium, fer etc.) sont propices à la réalisation d'échangeurs thermiques à hautes températures et peuvent être chauffés jusqu'à 1200°C sans modification chimique notable. De plus, l'incorporation des métaux plus lourds permet d'augmenter la densité des matériaux et ainsi améliorer la capacité de stockage thermique d'énergie. Un exemple est fourni par la pyromorphite (phosphate de plomb) avec une masse volumique de 7,1 g/cm³, valeur bien plus élevée que les masses volumiques des phosphates d'alcalins ou d'alcalino-terreux qui vont de 2 à 3,5 g/cm³.

Une diversité importante de minéraux est connu dans la nature, retrouvés dans les pegmatites ou roches métamorphiques dans les veines de hautes températures, comme par exemple la lazulite, MgAl₂(PO₄)₂(OH)₂, ou encore la turquoise, ou en général des minéraux de la famille des apatites de formule (Ca₅(PO₄)₃F), mais plus généralement de formule substituée : (Ca,Sr,Pb)₅[(P,As,V,Si)O₄]₃(F,Cl,OH), formant des composés qui ont en commun la présence d'un groupe orthophosphate PO₄³⁻ . Ces produits étant relativement rares, il peut être avantageux de les remplacer par des minerais abondants tels les dépôts de roches phosphatées qui servent de matière première pour l'industrie des engrais phosphatés. Ces minerais sont en fait d'anciens sédiments de phosphates d'origine osseuse animale et retrouvés en grande quantité dans certains gisements géologiques. On peut aisément effectuer un mélange de ces minerais bruts disponibles sous forme de poudres avec d'autres phosphates sélectionnés pour leur point de fusion adapté à l'application choisie en stockage thermique. Les minéraux phosphatés sont compatibles entre eux et ne se décomposent pas lors du chauffage de l'ensemble, si bien que le minerai bon marché peut augmenter le volume de phosphate sélectionné pour l'application de stockage thermique. Il est aussi intéressant de mélanger des phosphates ayant différents points de fusion ou de cristallisation afin d'augmenter les plages de températures ou surviennent les phénomènes de cristallisation et libération de l'enthalpie de cristallisation. Le sodium polyphosphate mélangé au minerai brut forme ainsi un produit économe et bien adapté au stockage de grandes quantités d'énergie. Il est aussi possible d'ajouter aux phosphates majoritaires d'autres espèces inertes minoritaires (de préférence, dans une quantité de moins de 50% en masse de la composition totale) afin de réduire encore leur coût ou améliorer leurs capacités en modifiant leurs propriétés physicochimiques, en particulier le talc (silicate de magnésium) ou le sable (silice) modifient la granulométrie et la facilité à remplir des réacteurs de fusion dans les systèmes de stockage thermique. Ces charges inertes amorphes ou cristallines contenant de la silice aident à la formation des masses que sont les matériaux de stockage thermique et qui remplissent les réacteurs d'échange thermique et peuvent en réduire le coût. Le quartz est intéressant grâce à son coefficient de dilatation thermique nul. Par ailleurs, les impuretés colorées présentes dans les phosphates soit naturels, soit synthétiques, peuvent modifier les matériaux de façon constructive, car ces impuretés (le fer, le manganèse et d'autres espèces minérales ou carbonées comme le graphite) peuvent améliorer l'absorption des photons (le noir absorbe plus que le blanc) et aussi améliorer la conductivité thermique.

## Revendications

1. Utilisation d'un matériau à base de phosphate en tant que produit caloporteur ou produit de stockage thermique d'énergie,
dans laquelle ledit matériau à base de phosphate comprend un ou plusieurs orthophosphates, pyro-phosphates, poly-phosphates, apatites pures ou substituées, et/ou minerais de phosphates, avec un rapport atomique de O/P compris entre 3 et 4, utilisés seuls ou en combinaisons ou en mélange majoritaire à plus de 50% en masse avec d'autres solides inertes minoritaires contenant de la silice,
dans laquelle le(s) phosphate(s) dudit matériau à base de phosphate est (sont) constitué(s) de phosphate(s) anhydre(s), et
dans laquelle ledit matériau à base de phosphate est porté à une température d'au moins 130°C.

2. Utilisation selon la revendication 1, dans laquelle ledit matériau à base de phosphate comprend un ou plusieurs sels de métaux alcalins, de métaux alcalinoterreux et/ou de métaux di- ou trivalents et/ou de métaux de transition.

3. Utilisation selon la revendication 1 ou 2, dans laquelle le matériau à base de phosphate comprend une charge non-phosphate en pourcentage massique inférieur à 50%.

4. Utilisation selon la revendication 3, dans laquelle ladite charge non-phosphate comprend une forme de silice, du talc, du sable, ou d'autres silicates amorphes ou cristallins tel que le quartz.

5. Utilisation selon l'une quelconque des revendications 1 à 4, dans laquelle ledit matériau à base de phosphate comprend un composant coloré foncé.

6. Utilisation selon la revendication 5, dans laquelle ledit composant coloré est un graphite à une teneur comprise entre 1% et 2% en masse.

7. Utilisation selon l'une quelconque des revendications 1 à 6, dans laquelle ledit matériau à base de phosphate comprend deux ou plusieurs phosphates avec des points de fusion différents.

8. Système de stockage de l'énergie thermique comportant un réacteur contenant un matériau à base de phosphates, ledit réacteur étant sous forme d'échangeur thermique parcouru par un fluide caloporteur pour évacuer les calories vers au moins une installation consommatrice de chaleur comme une turbine à vapeur ou un local à réchauffer,
dans laquelle ledit matériau à base de phosphate comprend un ou plusieurs orthophosphates, pyro-phosphates, poly-phosphates, apatites pures ou substituées, et/ou minerais de phosphates, avec un rapport atomique de O/P compris entre 3 et 4, utilisés seuls ou en combinaisons ou en mélange majoritaire à plus de 50% en masse avec d'autres solides inertes minoritaires contenant de la silice,
dans laquelle le(s) phosphate(s) dudit matériau à base de phosphate est (sont) constitué(s) de phosphate(s) anhydre(s).

9. Système de stockage de l'énergie thermique selon la revendication 8, dans lequel ledit fluide caloporteur est de l'air comprimé.

10. Système de stockage de l'énergie thermique selon la revendication 8 ou 9, dans lequel ledit matériau à base de phosphates comprend le phosphate réfractaire du type apatite ou un mélange apatite/minerai phosphaté fritté, d'origine naturelle ou synthétique.

11. Système de stockage de l'énergie thermique comportant un matériau à base de phosphate fondu circulant entre une source chaude d'énergie thermique et un échangeur thermique consommateur d'énergie,
dans laquelle ledit matériau à base de phosphate comprend un ou plusieurs orthophosphates, pyro-phosphates, poly-phosphates, apatites pures ou substituées, et/ou minerais de phosphates, avec un rapport atomique de O/P compris entre 3 et 4, utilisés seuls ou en combinaisons ou en mélange majoritaire à plus de 50% en masse avec d'autres solides inertes minoritaires contenant de la silice,
dans laquelle le(s) phosphate(s) dudit matériau à base de phosphate est (sont) constitué(s) de phosphate(s) anhydre(s).

12. Système de stockage de l'énergie thermique selon la revendication 11, dans lequel ledit matériau à base de phosphates comprend le Na₃P₃O₉ et/ou le (NaPO₃)ₙ, avec n compris entre 3 et 16.

## Patentansprüche

1. Verwendung eines Materials auf Phosphatbasis als Wärmeüberträgerprodukt oder Wärmeenergiespeicherprodukt,
wobei das Material auf Phosphatbasis ein oder mehrere Orthophosphate, Pyrophosphate, Polyphosphate, reine oder substituierte Apatite und/oder Phosphaterze mit einem O/P-Atomverhältnis, das zwischen 3 und 4 liegt, umfasst, die allein oder in Kombinationen oder in einem Mehrheitsgemisch von mehr als 50 Massen-% mit anderen minderheitlichen inerten Feststoffen, die Siliciumdioxid enthalten, verwendet werden,
wobei das/die Phosphat/e des Materials auf Phosphatbasis aus wasserfreiem/wasserfreien Phosphat/en besteht/bestehen, und
wobei das Material auf Phosphatbasis auf eine Temperatur von mindestens 130 °C gebracht wird.

2. Verwendung nach Anspruch 1, wobei das Material auf Phosphatbasis ein oder mehrere Salze von Alkalimetallen, Erdalkalimetallen und/oder zwei- oder dreiwertigen Metallen und/oder Übergangsmetallen umfasst.

3. Verwendung nach Anspruch 1 oder 2, wobei das Material auf Phosphatbasis eine Nicht-Phosphat-Beladung in einem Massenprozentanteil von weniger als 50 % umfasst.

4. Verwendung nach Anspruch 3, wobei die Nicht-Phosphat-Beladung eine Form von Siliciumdioxid, Talk, Sand oder anderen amorphen oder kristallinen Silicaten wie Quarz umfasst.

5. Verwendung nach einem der Ansprüche 1 bis 4, wobei das Material auf Phosphatbasis eine dunkle, farbige Verbindung umfasst.

6. Verwendung nach Anspruch 5, wobei die farbige Verbindung ein Graphit mit einem Gehalt ist, der zwischen 1 Massen-% und 2 Massen-% liegt.

7. Verwendung nach einem der Ansprüche 1 bis 6, wobei das Material auf Phosphatbasis zwei oder mehr Phosphate mit unterschiedlichen Schmelzpunkten umfasst.

8. Wärmeenergiespeichersystem, umfassend einen Reaktor, der ein Material auf Phosphatbasis enthält, wobei der Reaktor in Form eines Wärmetauschers vorliegt, durch den ein Wärmeträgerfluid strömt, um die Kalorien zu mindestens einer wärmeverbrauchenden Anlage wie einer Dampfturbine oder einem zu beheizenden Raum abzuführen,
wobei das Material auf Phosphatbasis ein oder mehrere Orthophosphate, Pyrophosphate, Polyphosphate, reine oder substituierte Apatite und/oder Phosphaterze mit einem O/P-Atomverhältnis, das zwischen 3 und 4 liegt, umfasst, die allein oder in Kombinationen oder in einem Mehrheitsgemisch von mehr als 50 Massen-% mit anderen minderheitlichen inerten Feststoffen, die Siliciumdioxid enthalten, verwendet werden,
wobei das/die Phosphat/e des Materials auf Phosphatbasis aus wasserfreiem/wasserfreien Phosphat/en besteht/bestehen.

9. Wärmeenergiespeichersystem nach Anspruch 8, wobei das Wärmeträgerfluid Druckluft ist.

10. Wärmeenergiespeichersystem nach Anspruch 8 oder 9, wobei das Material auf Phosphatbasis hitzebeständiges Phosphat vom Apatit-Typ oder ein Gemisch aus Apatit/gesintertem phosphathaltigem Erz mit natürlichem oder synthetischem Ursprung umfasst.

11. Wärmeenergiespeichersystem, umfassend ein schmelzflüssiges Material auf Phosphatbasis, das zwischen einer warmen Wärmeenergiequelle und einem energieverbrauchenden Wärmetauscher zirkuliert,
wobei das Material auf Phosphatbasis ein oder mehrere Orthophosphate, Pyrophosphate, Polyphosphate, reine oder substituierte Apatite und/oder Phosphaterze mit einem O/P-Atomverhältnis, das zwischen 3 und 4 liegt, umfasst, die allein oder in Kombinationen oder in einem Mehrheitsgemisch von mehr als 50 Massen-% mit anderen minderheitlichen inerten Feststoffen, die Siliciumdioxid enthalten, verwendet werden,
wobei das/die Phosphat/e des Materials auf Phosphatbasis aus wasserfreiem/wasserfreien Phosphat/en besteht/bestehen.

12. Wärmeenergiespeichersystem nach Anspruch 11, wobei das Material auf Phosphatbasis Na₃P₃O₉ und/oder (NaPO₃)ₙ umfasst, wobei n zwischen 3 und 16 liegt.

## Claims

1. Use of a phosphate-based material as a heat transfer medium or thermal energy storage medium,
wherein said phosphate-based material comprises one or more orthophosphates, pyrophosphates, polyphosphates, pure or substituted apatites, and/or phosphate ores, with an O/P atomic ratio comprised between 3 and 4, used alone or in combinations or in a majority mixture of more than 50% by mass with other inert minority solids containing silica,
wherein the phosphate(s) of said phosphate-based material consist(s) of anhydrous phosphate(s), and
wherein said phosphate-based material is heated to a temperature of at least 130°C.

2. Use as claimed in claim 1, wherein said phosphate-based material comprises one or more salts of alkali metals, of alkaline earth metals and/or of di- or trivalent metals and/or of transition metals.

3. Use as claimed in claim 1 or 2, wherein the phosphate-based material comprises a non-phosphate filler in mass percent of less than 50%.

4. Use as claimed in claim 3, wherein said non-phosphate filler comprises a silica form, talc, sand, or other amorphous or crystalline silicates such as quartz.

5. Use as claimed in any one of claims 1 to 4, wherein said phosphate-based material comprises a dark colored component.

6. Use as claimed in claim 5, wherein said colored component is a graphite in a content comprised between 1% and 2% by mass.

7. Use as claimed in any one of claims 1 to 6, wherein said phosphate-based material comprises two or more phosphates with different melting points.

8. A thermal energy storage system comprising a reactor containing a phosphate-based material, said reactor being in the form of a heat exchanger through which a heat transfer fluid flows in order to discharge the calories to at least one heat-consuming installation such as a steam turbine or a premises to be heated,
wherein said phosphate-based material comprises one or more orthophosphates, pyrophosphates, polyphosphates, pure or substituted apatites, and/or phosphate ores, with an O/P atomic ratio comprised between 3 and 4, used alone or in combinations or in a majority mixture of more than 50% by mass with other inert minority solids containing silica,
wherein the phosphate(s) of said phosphate-based material consist(s) of anhydrous phosphate(s).

9. The thermal energy storage system as claimed in claim 8, wherein said heat transfer fluid is compressed air.

10. The thermal energy storage system as claimed in claim 8 or 9, wherein said phosphate-based material comprises refractory phosphate of the apatite type or a sintered apatite/phosphate ore mixture of natural or synthetic origin.

11. A thermal energy storage system comprising a molten phosphate-based material circulating between a hot source of thermal energy and an energy-consuming heat exchanger,
wherein said phosphate-based material comprises one or more orthophosphates, pyrophosphates, polyphosphates, pure or substituted apatites, and/or phosphate ores, with an O/P atomic ratio comprised between 3 and 4, used alone or in combinations or in a majority mixture of more than 50% by mass with other inert minority solids containing silica,
wherein the phosphate(s) of said phosphate-based material consist(s) of anhydrous phosphate(s).

12. The thermal energy storage system as claimed in claim 11, wherein said phosphate-based material comprises Na₃P₃O₉ and/or (NaPO₃)ₙ, with n comprised between 3 and 16.
